(19) **Europäisches Patentamt**
**European Patent Office**
**Office européen des brevets**

(11) **EP 3 377 762 B1**

(12) **EUROPÄISCHE PATENTSCHRIFT**

(45) Veröffentlichungstag und Bekanntmachung des Hinweises auf die Patenterteilung:
**27.08.2025 Patentblatt 2025/35**

(21) Anmeldenummer: **16794624.3**

(22) Anmeldetag: **11.11.2016**

(51) Internationale Patentklassifikation (IPC):
**H02H 9/04** [(2006.01)]

(52) Gemeinsame Patentklassifikation (CPC):
**F03D 80/30; F03D 1/0675; H02G 13/00;**
**H02H 9/041;** H02G 13/80; H02H 9/042; Y02E 10/72

(86) Internationale Anmeldenummer:
**PCT/EP2016/077393**

(87) Internationale Veröffentlichungsnummer:
**WO 2017/084971 (26.05.2017 Gazette 2017/21)**

(54) **VERFAHREN ZUR BEEINFLUSSUNG DER BLITZSTROMVERTEILUNG IN ELEKTRISCHEN SYSTEMEN, WELCHE IN ROTORBLÄTTER VON WINDKRAFTANLAGEN INTEGRIERT SIND**

METHOD FOR INFLUENCING THE LIGHTENING CURRENT DISTRIBUTION IN ELECTRICAL SYSTEMS, WHICH ARE INTEGRATED IN ROTOR BLADES OF WIND TURBINES

PROCÉDÉ POUR INFLUENCER LA DISTRIBUTION DE COURANT DE FOUDRE DANS DES SYSTÈMES ÉLECTRIQUES QUI SONT INTÉGRÉS DANS DES PALES DE ROTOR D'ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2015 DE 102015014997**
**15.02.2016 DE 102016001734**

(43) Veröffentlichungstag der Anmeldung:
**26.09.2018 Patentblatt 2018/39**

(73) Patentinhaber: **DEHN SE**
**92318 Neumarkt i.d. OPf. (DE)**

(72) Erfinder: **BIRKL, Josef**
**92334 Berching (DE)**

(74) Vertreter: **Prinz & Partner mbB**
**Patent- und Rechtsanwälte**
**Rundfunkplatz 2**
**80335 München (DE)**

(56) Entgegenhaltungen:
EP-A1- 1 187 988          EP-B1- 1 187 988
US-A1- 2008 181 775     US-A1- 2010 119 370
US-A1- 2011 020 134     US-A1- 2015 204 311

**Beschreibung**

Die Erfindung betrifft ein Verfahren zur Beeinflussung der Blitzstromverteilung in elektrischen Systemen, welche in Rotorblätter von Windkraftanlagen integriert sind, wobei im jeweiligen Rotorblatt mindestens ein Blitzstromrezeptor befindlich ist, um Blitzströme über eine Ableiteinrichtung von der Rotorblattspitze zur Rotorblattwurzel und weiter gegen Erde zu führen, gemäß Patentanspruch 1.

Aus der DE 10 2007 050 009 A1 ist ein Rotorflügel für eine Windenergieanlage vorbekannt, wobei der Rotorflügel ein Blitzschutzsystem enthält. Der Rotorflügelkörper weist einen Abnehmer, d.h. einen Rezeptor auf, der als Ort für das Auftreffen eines Blitzeinschlags ausgelegt ist. Weiterhin ist ein isoliertes Ableitelement innerhalb des Rotorflügelkörpers vorhanden, wobei der isolierte Ableiter und der wenigstens eine Rezeptor miteinander verbunden sind. Weiterhin ist eine dielektrische Schicht vorhanden, die den Ableiter als Isolierung bedeckt. Der Ableiter steht mit einem Erdanschluss in Verbindung.

Aus der DE 100 22 128 C1 ist eine Windenergieanlage mit Blitzschutzsystem vorbekannt. Das entsprechende Blitzschutzsystem ist in der Lage, einen hohen Blitzstrom aufzunehmen und über eine Funkenstrecke in den Turm und dann in das Erdreich zu einem Erdungsanschluss hin abzuleiten. Das dortige Blitzschutzsystem stellt sicher, dass der Blitzstrom nicht über die Rotorlager und auch nicht über vorhandene Hauptlager fließt, wozu mehrere Funkenstrecken erforderlich werden. Es hat sich gezeigt, dass bei derartigen Blitzschutzsystemen die galvanisch getrennte Blitzschutzeinrichtungen durch die Rotorblätter einer statischen Aufladung unterliegen. Die elektrostatische Aufladung des Rotorblatts entsteht durch die Luftreibung der rotierenden Rotorblätter der Windenergieanlage. Die statische Aufladung erfolgt so lange, bis die Überschlagsspannung der Luftstrecke erreicht ist. Infolge dessen tritt ein Überschlag auf. Der Überschlag erzeugt jedoch elektromagnetische Wellen mit einer hohen Bandbreite, die elektronische Komponenten der Windenergieanlage stören können.

US2015/204311A1 ist ein weiteres relevantes Dokument des Standes der Technik.

Um dieses Aufladen der Rotorblätter zu verhindern, wird eine kontinuierliche Entladung vorgeschlagen. Insofern ist eine kontinuierliche Entladungsstrecke ausgebildet, welche so niederohmig ist, dass eine statische Aufladung der Rotorblätter vermieden wird, und die weiterhin in der Lage ist, eine Stoßspannung in Höhe von 30 kV und mehr zu überstehen. Insofern ist eine Entladeschaltung vorhanden, die aus einer Reihenschaltung eines ohmschen Widerstands und einer Induktivität besteht.

Es geht also bei der vorbekannten Lehre um die Problematik der elektrostatischen Aufladung von Rotorblättern sowie den Blitzschutz. Die vorbekannte Einrichtung zur kontinuierlichen Entladung der Rotorblätter mit Entladeschaltung und Induktivität ist während der statischen Entladung nicht in Funktion, da die Ableitströme einen Gleichstrom mit kleiner Amplitude darstellen. Im Falle eines Blitzschlags steigt die Spannung an der eingesetzten Funkenstrecke an. Die Höhe der Spannung ist u.a. vom Abstand, dem Krümmungsradius der Kontaktspitzen und der Luftfeuchtigkeit abhängig. Die vorhandene Induktivität begrenzt den Anstieg des Blitzstroms, der durch den statischen Ableiter fließt. Hierdurch ergibt sich ein passiver Schutz für den Ableitwiderstand. Eine möglicherweise sinnvolle Blitzstromverteilung wird in der vorbekannten Lehre des Standes der Technik nicht angesprochen.

Es ist bekannt, dass Windkraftanlagen aufgrund zunehmender Bauhöhen und ihrer exponierten Lage einer hohen Blitzeinschlagwahrscheinlichkeit unterliegen. Dabei werden die Rotorblätter einer Windkraftanlage besonders häufig von direkten Blitzeinschlägen getroffen. Wie vorstehend geschildert, ist es daher bekannt, Rotorblätter mit einer Einrichtung zum Auffangen der Blitze und einer Einrichtung zum Ableiten der Blitzströme von der Rotorblattspitze in die Rotorblattwurzel auszurüsten. Derartige Einrichtungen werden üblicherweise als Rezeptoren bezeichnet und sind Bestandteil des entsprechenden Rotorblatts.

Weiterhin kommen zunehmend Rotorblätter zum Einsatz, die elektrische oder elektronische Systeme beinhalten. Diese elektrischen oder elektronischen Systeme dienen beispielsweise der Ansteuerung von Warnleuchten in den Rotorblattspitzen, der Einstellung des Anstellwinkels der Rotorblätter, einer Rotorblattbeheizung und zu weiteren Zwecken.

Grundsätzlich ist es notwendig, diese elektrischen oder elektronischen Systeme in den Blitzschutz-Potentialausgleich einzubeziehen. Dabei besteht jedoch die Gefahr, dass der diesbezügliche elektrische Zweig des zusätzlichen elektrischen Systems mit einem zu hohen Blitzteilstrom belastet wird, so dass es zu einer Beschädigung oder Zerstörung der elektrischen Komponenten in dem jeweiligen System kommen kann.

Aus dem Vorstehenden ist es daher Aufgabe der Erfindung, ein Verfahren zur Beeinflussung der Blitzstromverteilung in elektrischen Systemen anzugeben, welche in Rotorblätter von Windkraftanlagen integriert sind, wobei im jeweiligen Rotorblatt mindestens ein Blitzstromrezeptor befindlich ist, um Blitzströme über eine Ableiteinrichtung von der Rotorblattspitze zur Rotorblattwurzel und weiter gegen Erde zu führen. Aufgabengemäß soll sichergestellt werden, dass neben der notwendigen Einbindung zusätzlicher elektrischer Systeme innerhalb des Rotorblatts in den Blitzschutz-Potentialausgleich diese Systeme vor zu hohen Blitzteilströmen geschützt werden.

Die Lösung der Aufgabe der Erfindung erfolgt mit einer Lehre gemäß Patentanspruch 1, wobei die Unteransprüche mindestens zweckmäßige Ausgestaltungen und Weiterbildungen umfassen.

Die Verfahrenslehre zielt dabei auf den Grundgedanken, zwischen dem jeweiligen, im Rotorblatt befindlichen elektrischen System und dem Teil der Ableiteinrichtung, welche sich im Rotorblatt befindet, mindestens einen, bevorzugt mehrere Überspannungsableiter anzuordnen.

Durch jeweils eine Zusatzimpedanz im Überspannungs- bzw. Potentialausgleichspfad wird der im Blitzschlag fließende Teilstrom durch das elektrische System reduziert.

Die Zusatzimpedanz ist dabei erfindungsgemäß so ausgelegt, dass die resultierende Potentialdifferenz zwischen dem elektrischen System und der Ableiteinrichtung im Blitzfall auf die Spannungsfestigkeit des jeweiligen elektrischen Systems und den erforderlichen Trennungsabstand zwischen dem jeweiligen elektrischen System und der Ableiteinrichtung abgestimmt ist.

Es erfolgt also eine absichtliche, zielgerichtete Impedanzerhöhung im Überspannungsableitpfad zwischen dem elektrischen System und der eigentlichen Ableiteinrichtung mit der Folge einer Beeinflussung der Blitzstromverteilung derart, dass eine Verringerung der Blitzteilströme im zu schützenden elektrischen oder elektronischen System und den entsprechenden Stromkreisen erreicht wird.

Die für die erfindungsgemäße Umsetzung notwendige Koordinierung der Ausgestaltung der Zusatzimpedanz mit der Spannungsfestigkeit der jeweiligen elektrischen Systeme und damit einhergehend die Ausgestaltung des Trennungsabstands zwischen den voneinander getrennten Systemen, d.h. dem eigentlichen elektrischen System und der Ableiteinrichtung ist besonders vorteilhaft bei Rotorblättern von Windkraftanlagen realisierbar, die entsprechende elektrische Systeme enthalten. In Rotorblättern von Windkraftanlagen ist der erforderliche Trennungsabstand nicht unter allen Umständen und Gegebenheiten einfach realisierbar. Es muss entlang der gesamten Rotorblattlänge überprüft werden, ob der aufgrund des geometrischen Aufbaus des Rotorblatts gegebene Trennungsabstand zwischen dem dort integrierten oder vorhandenen elektrischen System und der Blitzstromableitung ausreichend ist. Falls die Spannung zwischen beiden Systemen die jeweilige Spannungsfestigkeit überschreitet, ist für einen zusätzlichen Potentialausgleich in erfindungsgemäßer Weise zu sorgen.

Bei einer bevorzugten Ausgestaltung ist die Zusatzimpedanz und deren elektrische Anbindung niederinduktiv ausgeführt, um bei hohen Blitzstromsteilheiten den Spannungsabfall über der Zusatzimpedanz und die Potentialdifferenz zwischen dem jeweiligen elektrischen System und der Ableiteinrichtung gering zu halten.

In einer Ausgestaltung der Erfindung ist zur Begrenzung des Spannungsabfalls die notwendige gesamte Zusatzimpedanz durch eine Verteilung mehrerer niedriger Einzelimpedanzen über den betreffenden Strompfad realisierbar.

Die Zusatzimpedanz kann durch einen Werkstoff mit höherem Leitwert, aber auch durch Verwendung eines halbleitenden Werkstoffs realisiert werden. Erfindungsgemäß wird ein Edelstahl bzw. nichtrostender Stahl im Vergleich zu Kupfer in dem Anlagenteil eingesetzt der möglichst wenig durch Blitzteilströme belastet werden soll.

Die gewünschte Zusatzimpedanz kann aber auch durch eine gezielte Impedanzerhöhung im jeweiligen Überspannungsableiter realisiert werden. Beispielsweise kann als Überspannungsableiter ein Varistor mit erhöhter Bemessungsspannung oder eine Funkenstrecke mit erhöhter Bogenbrennspannung eingesetzt werden. Es ist aber auch möglich, Standard-Überspannungsableiter, z.B. Varistoren oder Funkenstrecken zu benutzen, welche mit zusätzlich extern angeordneter Zusatzimpedanz versehen sind.

Die Erfindung soll nachstehend anhand eines Ausführungsbeispiels sowie unter Zuhilfenahme von Figuren näher erläutert werden.

Hierbei zeigen:

Fig. 1    eine Prinzipdarstellung eines Rotorblatts einer Windkraftanlage mit beispielhaft zwei Rezeptoren, die mit einer Erdleitung als Ableiteinrichtung verbunden sind, sowie einem elektrischen System, das im Rotorblatt angeordnet ist, wobei es sich hier um eine Rotorblattbeheizung handeln kann, und

Fig. 2    eine Darstellung ähnlich derjenigen nach Fig. 1, jedoch mit einer Überspannungsschutzeinrichtung nebst Zusatzimpedanz, die zwischen dem elektrischen System und der Erdleitung bzw. der Ableiteinrichtung innerhalb des Rotorblatts vorgesehen ist.

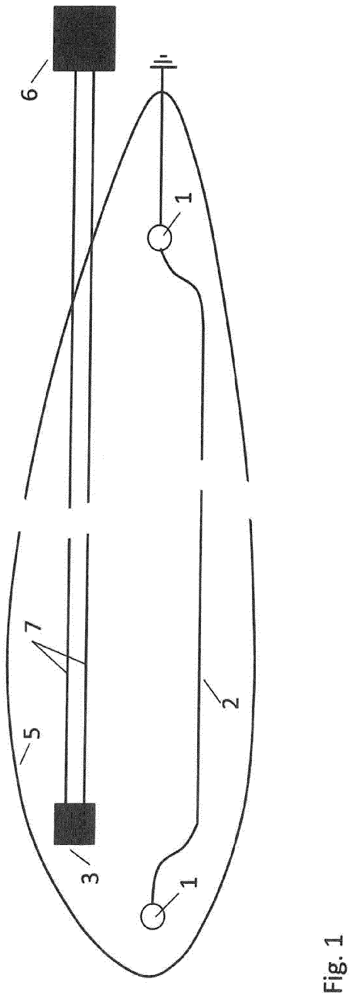

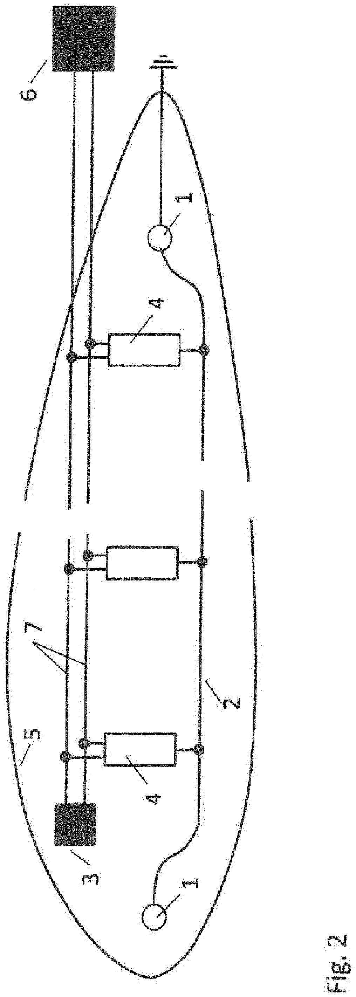

Bei den Darstellungen nach Fig. 1 und 2 wird von einem Rotorblatt 5 einer Windkraftanlage ausgegangen.

Im Rotorblatt 5 sind beispielsweise zwei Rezeptoren 1 als Blitzfangelemente ausgebildet. Zwischen den Rezeptoren 1 befindet sich eine Erdleitung als Ableiteinrichtung, die in der Lage ist, Blitzströme gegen Erde zu führen. Ein elektrisches System, insbesondere ein elektrischer Verbraucher 3 für eine Rotorblattheizung steht über Stromversorgungsleitungen 7 mit einer externen Stromquelle 6 in Verbindung.

Der reale Trennungsabstand zwischen den Stromversorgungsleitungen 7 und der Erdleitung 2 bzw. Ableiteinrichtung ist ≤ 1 m, wie dies symbolhaft in der Fig. 1 dargestellt ist.

Der tatsächlich benötigte Trennungsabstand nach EN 62305-3 s ergibt sich wie folgt:

$$s = k_i \cdot k_c / k_m \cdot l$$

mit

$k_1 = 0{,}08$ für LPL1

$k_m = 1{,}0$ für Luft

$k_c = 1.0$ für n=1 (Anzahl der Ableitungen)

$l = 50$ m.

Der Trennungsabstand s müsste also 4 m betragen. Es ist aus der Darstellung nach Fig. 1 ersichtlich, dass der reale Trennungsabstand viel kleiner als der benötigte Trennungsabstand ist. Ohne Einbindung in einen Blitzschutz-Potentialausgleich würde also im Fall eines Blitzeinschlags an den Rezeptoren 1 es zu einem Überschlag mit völliger Zerstörung des elektrischen Verbrauchers 3 nebst Stromversorgungsleitungen 7 kommen.

Bei der Darstellung nach Fig. 2 wird gezielt zwischen dem elektrischen Verbraucher 3, d.h. der Stromversorgungsleitungen 7, und der Erdleitung 2 eine Anordnung von im Beispiel drei Überspannungsschutzeinrichtungen 4 mit Zusatzimpedanz ausgebildet.

Diese Anordnung ermöglicht ein Einbinden des elektrischen Verbrauchers 3 mit seinen Stromversorgungsleitungen 7 in den Potentialausgleich über die Erdleitung 2 hin zur symbolisch dargestellten Erde.

Der Spannungsabfall über die Überspannungsschutzeinrichtung mit Zusatzimpedanz 4 ist gleich zum Potentialunterschied zwischen der Erdleitung 2 und der Stromversorgungsleitung 7 und beträgt beispielsweise 200 kV. Bei 200 kV beträgt der Trennungsabstand $\geq 800$ mm. Dies bedeutet, dass der reale Trennungsabstand von ca. 1 m völlig ausreichend ist, um Überschläge zu vermeiden. Gleichzeitig gelingt es, durch die Ausbildung einer Überspannungsschutzeinrichtung mit Zusatzimpedanz das Fließen zu hoher Blitzteilströme über den elektrischen Verbraucher 3 bzw. der Stromversorgungsleitungen 7 zu verhindern.

Mit der vorgestellten Lösung gelingt es also nicht nur, zusätzliche elektrische Systeme, die in Rotorblättern von Windkraftanlage vorhanden sind, in einen Potentialausgleich einzubinden, sondern es wird sichergestellt, dass der betreffende elektrische Zweig des zusätzlichen elektrischen Systems nicht unnötig mit einem Blitzteilstrom belastet wird. Nach wie vor fließt der Hauptblitzstrom über das im Rotorblatt vorgesehene, dafür ausgelegte Blitzschutzsystem, umfassend Rezeptoren und Erdleitung bzw. Ableiteinrichtung.

## Patentansprüche

1. Verfahren zur Beeinflussung der Blitzstromverteilung in elektrischen oder elektronischen Systemen, welche in Rotorblätter von Windkraftanlagen integriert sind, wobei im jeweiligen Rotorblatt mindestens ein Blitzstromrezeptor befindlich ist, um Blitzströme über eine Ableiteinrichtung von der Rotorblattspitze zur Rotorblattwurzel und weiter gegen Erde zu führen, wobei

zwischen dem jeweiligen, im Rotorblatt befindlichen elektrischen oder elektronischen System und dem Teil der Ableiteinrichtung, welcher sich im Rotorblatt befindet, mindestens ein Überspannungsableiter zur Bildung eines Überspannungsableitpfades angeordnet ist,

**dadurch gekennzeichnet, dass**

durch jeweils eine Zusatzimpedanz im Überspannungsableitpfad der im Blitzfall fließende Teilstrom durch das elektrische oder elektronische System reduziert wird, wobei die Zusatzimpedanz so ausgelegt wird, dass die resultierende Potentialdifferenz zwischen dem elektrischen oder elektronischen System und der Ableiteinrichtung im Blitzfall auf die Spannungsfestigkeit des jeweiligen elektrischen oder elektronischen Systems und den erforderlichen Trennungsabstand zwischen dem jeweiligen elektrischen oder elektronischen System und der Ableiteinrichtung abgestimmt ist, diesbezüglich die Zusatzimpedanz und deren elektrische Anbindung niederinduktiv ausgeführt ist, um bei hohen Blitzstromsteilheiten den Spannungsabfall über die Zusatzimpedanz und die Potentialdifferenz zwischen dem jeweiligen elektrischen oder elektronischen System und der Ableiteinrichtung gering zu halten, wobei zur Begrenzung des Spannungsabfalls die notwenige gesamte Zusatzimpedanz durch eine Verteilung mehrerer niedriger Einzelimpedanzen über den betreffenden Strompfad realisiert und die Zusatzimpedanz durch Edelstahl oder nichtrostender Stahl oder durch die Verwendung eines halbleitenden Werkstoffs verwirklicht wird.

2. Verfahren nach Anspruch 1,
**dadurch gekennzeichnet, dass**
durch die Zusatzimpedanz der Trennungsabstand variierbar ist.

3. Verfahren nach einem der vorangegangenen Ansprüche,
**dadurch gekennzeichnet, dass**
die gewünschte Zusatzimpedanz durch eine gezielte Impedanzerhöhung im jeweiligen Überspannungsableiter realisiert wird.

## Claims

1. A method for influencing the lightning current distribution in electrical or electronic systems which are integrated in rotor blades of wind turbines, wherein at least one lightning current receptor is located in the respective rotor blade in order to conduct lightning currents via a discharge device from the rotor blade tip to the rotor blade root and onwards to earth, wherein

at least one overvoltage arrester for forming an overvoltage discharge path is arranged between the respective electrical or electronic system positioned in the rotor blade and the part of the discharge device which is positioned in the rotor blade,
**characterized in that**
the partial current flowing through the electrical or electronic system in the event of lightning is reduced by a respective additional impedance in the overvoltage discharge path, wherein the additional impedance is designed such that, in the event of lightning, the resulting potential difference between the electrical or electronic system and the discharge device is matched with the dielectric strength of the respective electrical or electronic system and the required separation distance between the respective electrical or electronic system and the discharge device, the additional impedance and the electrical interconnection thereof are in this respect formed to be low-inductance so as to keep the voltage drop across the additional impedance and the potential difference between the respective electrical or electronic system and the discharge device low in case of high lightning current gradients, wherein the necessary entire additional impedance is realized by distributing several low individual impedances across the current path concerned for limiting the voltage drop, and the additional impedance is realized by stainless steel or corrosion-resistant steel or by using a semiconducting material.

2. The method according to claim 1,
**characterized in that**
the separation distance can be varied by the additional impedance.

3. The method according to either of the preceding claims,
**characterized in that**
the desired additional impedance is realized by a targeted impedance increase in the respective overvoltage arrester.

**Revendications**

1. Procédé pour influencer la répartition de courant de foudre dans des systèmes électriques ou électroniques intégrés dans des pales de rotor d'éoliennes, au moins un récepteur de courant de foudre étant présent dans la pale de rotor respective pour guider des courants de foudre par l'intermédiaire d'un moyen de dérivation de la pointe de la pale de rotor au pied de la pale de rotor et plus loin à la terre,

au moins un parasurtenseur pour la génération d'un trajet de dérivation de surtension étant agencé entre le système électrique ou électronique respectif présent dans la pale de rotor et la partie du moyen de dérivation présente dans la pale de rotor,
**caractérisé en ce que**
par une impédance supplémentaire respective dans le trajet de dérivation de surtension, le courant partiel circulant en cas de foudre à travers le système électrique ou électronique est réduit, l'impédance supplémentaire étant réalisée de telle sorte que la différence de potentiel résultante entre le système électrique ou électronique et le moyen de dérivation en cas de foudre est adaptée à la résistance au claquage du système électrique ou électronique respectif et la distance de séparation nécessaire entre le système électrique ou électronique respectif et le moyen de dérivation, l'impédance supplémentaire et le raccordement électrique de celle-ci étant à ce sujet réalisés à faible inductance pour maintenir la chute de tension à travers l'impédance supplémentaire et la différence de potentiel entre le système électrique ou électronique respectif et le moyen de dérivation à un faible niveau en cas de vitesses de croissance de courant de foudre élevées, l'impédance supplémentaire totale requise étant réalisée par une répartition de plusieurs impédances individuelles faibles sur le trajet de courant concerné pour limiter la chute de tension, et l'impédance supplémentaire étant réalisée par acier fin ou acier inoxydable ou par l'utilisation d'un matériau semi-conducteur.

2. Procédé selon la revendication 1,
**caractérisé en ce que**
la distance de séparation peut être variée par l'impédance supplémentaire.

3. Procédé selon l'une des revendications précédentes,
**caractérisé en ce que**
l'impédance supplémentaire souhaitée est réalisée par une augmentation d'impédance ciblée dans le parasurtenseur respectif.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007050009 A1
- DE 10022128 C1

- US 2015204311 A1